# FASCICULE DE BREVET EUROPEEN

(11) **EP 1 209 333 B1**
(45) Date de publication et mention de la délivrance du brevet: **07.01.2004**
(21) Numéro de dépôt: 01403006.8
(22) Date de dépôt: 23.11.2001
(51) Int. Cl.: F01N 9/00, F01N 3/023

(54) **Procédé de régénération d'un filtre à particules**
Verfahren zum Regenerieren eines Partikelfilters
Method for regenerating a particulate collection filter

(30) Priorité: 24.11.2000 FR 0015171
(43) Date de publication de la demande: 29.05.2002
(73) Titulaire: Renault s.a.s., 92100 Boulogne Billancourt (FR)
(72) Inventeur: Archimbaud, Marie-laure, 75010 Paris (FR); Hekimian, Georges, 92300 Levallois (FR)

(56) Documents cités:
- EP-A- 0 684 062
- FR-A- 2 781 251
- US-A- 5 287 698
- US-A- 5 511 413
- "Diesel fuel regeneration" DIESELNET, [en ligne] juillet 2001 (2001-07), pages 1-9, XP002190323 Extrait de l'Internet: <URL:http://www.dieselnet.com/tech/dpf_reg en.html?logged> [extrait le 2001-08-13]

## Description

L'invention propose un procédé de régénération d'un filtre à particules pour un moteur à combustion interne.

L'invention propose plus particulièrement un procédé de régénération d'un filtre à particules pour un moteur à combustion interne, grâce auquel on commande, de façon cyclique, la mise en oeuvre de moyens de régénération.

Les moteurs diesels et certains moteurs à essence émettent des substances polluantes telles que des particules.

On connaît des systèmes de traitement des gaz d'échappement qui permettent de diminuer les émissions de particules.

En particulier une méthode consiste à les filtrer à l'aide d'un filtre appelé filtre à particules.

A un tel dispositif nécessite une gestion particulière du fonctionnement du moteur. En effet, le filtre à particules retient les particules des gaz d'échappement et se remplit au fur et à mesure du fonctionnement du moteur. Ainsi, le filtre se colmate provoquant alors une contre pression dans la ligne d'échappement qui perturbe le fonctionnement du moteur et diminue son rendement. Il est donc nécessaire de le régénérer périodiquement pour le nettoyer et éliminer la contre pression.

La régénération du filtre à particules peut consister en la combustion des particules.

Pour ce faire, il faut les porter à leur température de combustion qui est d'environ 550°C. Cependant, les gaz d'échappement des moteurs diesels n'atteignent que rarement cette température puisque, par exemple en ville, la température des gaz d'échappement évolue entre 150 et 250 °C. Il faut alors augmenter spécifiquement la température des gaz d'échappement, lors d'une phase de régénération, de façon qu'ils atteignent la température de combustion des particules dans le filtre à particules.

La phase de régénération nécessite donc un apport de chaleur qui est plus ou moins important en fonction des conditions de fonctionnement du moteur. Dans tous les cas, la production de chaleur destinée à régénérer le filtre à particules dégrade le rendement du moteur.

Il est connu de déclencher la phase de régénération lorsque le niveau de chargement du filtre à particules atteint une valeur de seuil prédéterminée.

Le niveau de chargement du filtre à particules est généralement déterminé à partir de la différence de pression aux bornes du filtre à particules qui est mesurée par des capteurs de pression situés en amont et en aval du filtre (voir par example le brevet FR 2 781 251).

Cependant, les incertitudes de mesure et de calcul provoquent des erreurs qui ne permettent pas la détermination du niveau de chargement suffisamment précisément. Ainsi, le déclenchement de la phase de régénération n'est pas optimal pour minimiser l'impact de la régénération sur rendement du moteur.

De façon à fournir une solution à ce problème, l'invention propose un procédé de régénération d'un filtre à particules pour un moteur à combustion interne, grâce auquel on commande, de façon cyclique, la mise en oeuvre de moyens de régénération appropriés dés que la valeur du niveau de chargement du filtre en particules produites par le moteur excède une valeur de seuil prédéterminée, caractérisé en ce que la détermination du niveau de chargement du filtre à particules est réalisée périodiquement selon les étapes suivantes :
- détermination périodique de la différence de pression ΔP_{idet} entre l'entrée et la sortie du filtre à particules 42, et détermination périodique du débit Q_{idet} des gaz d'échappement G qui traverse le filtre à particules 42 de façon à former un couple (ΔP_{idet}, Q_{idet}) de valeurs de mesure ;
- estimation, pour chaque valeur de débit Q_{idet} de chaque couple (ΔP_{idet}, Q_{idet}), d'au moins une première ΔP₁ₑₛₜ et une seconde ΔP₂ₑₛₜ différence de pression à partir du modèle mathématique suivant définissant la kième différence de pression, ΔPₖₑₛₜ=(a₂₁*NIVₖ²+a₁₁*NIVₖ+a₀₁)*Q_{idet}²+ (a₂₁*NIVₖ²+a₁₀*NIVₖ+a₀₀)*Q_{idet} dans lequel
   ΔPₖₑₛₜ est la kième différence de pression entre l'entrée et la sortie du filtre à particules,
   les aₗₘ sont des constantes déterminées,
   Q_{idet} est le débit déterminé des gaz d'échappement qui traverse le filtre à particules, et
   NIVₖ est égal au kième niveau de chargement correspondant sensiblement au niveau de chargement du filtre 42 déterminé au cours de la période de détermination du niveau de chargement précédente, le niveau de chargement de ladite période précédente étant nul lors de la première utilisation du filtre à particules ;
      - détermination, pour chaque valeur de débit déterminée Q_{idet}, d'au moins une Δ₁ première et une seconde Δ₂ différences correspondant d'une part à la différence entre la différence de pression déterminée ΔP_{idet} et la première différence de pression estimée ΔP₁ₑₛₜ et, d'autre part, à la différence entre la différence de pression déterminée ΔP_{idet} et la seconde différence de pression estimée ΔP₂ₑₛₜ respectivement ;
      - calcul, à la fin de la période de détermination du niveau de chargement du filtre à particules 42, d'au moins une première Σ₁ et une deuxième Σ₂ sommes correspondant à la somme desdites premières Δ₁ et secondes Δ₂ différences respectivement au cours de ladite période ;
le niveau de chargement NIV du filtre à particules 42 déterminé étant égal au niveau de chargement NIVₖ correspondant à la somme Σ₁, Σ₂ la plus petite.

Selon d'autres caractéristiques du procédé :
- les valeurs de débit déterminées s'étendent dans une première plage qui est divisée en au moins deux zones, on calcule dans chacune des zones un couple moyen de valeurs dans lequel la différence de pression moyenne entre l'entrée et la sortie du filtre à particules correspond à la moyenne des différences de pression déterminées dans la zone correspondante, et dont le débit moyen des gaz d'échappement qui traverse le filtre à particules correspond à la moyenne des débits déterminés dans la zone correspondante, les valeurs moyennes étant calculées dans la période de détermination du niveau de chargement du filtre à particules ;
- le premier niveau de chargement est égal au niveau de chargement déterminé lors de la période de détermination du niveau de chargement précédent, augmenté d'un premier niveau de chargement résiduel ;
- le deuxième niveau de chargement est égal au niveau de chargement déterminé lors de la période de détermination du niveau de chargement précédent, diminué d'un deuxième niveau de chargement résiduel ;
- le premier et le deuxième niveau de chargement résiduel sont égaux ;
- lorsque la première et la deuxième somme sont égales, le niveau de chargement du filtre à particules correspond au niveau de chargement déterminé lors de la période de détermination précédente ;
- la première période de détermination du niveau de chargement est de l'ordre de quelques minutes ;
- la seconde période de détermination de la différence de pression entre l'entrée et la sortie du filtre à particules et de détermination du débit des gaz d'échappement qui traverse le filtre à particules est de l'ordre de la seconde ;
- la différence de pression entre l'entrée et la sortie du filtre à particules et/ou le débit des gaz d'échappement qui traverse le filtre à particules sont déterminés par des capteurs qui fournissent une information représentative de la différence de pression ΔP_{idet} et du débit Q_{idet} des gaz d'échappement G respectivement ;
- la différence de pression entre l'entrée et la sortie du filtre à particules et/ou le débit des gaz d'échappement qui traverse le filtre à particules sont déterminés par calcul à partir de paramètres du moteur et/ou d'informations mesurées.

De façon à minimiser encore l'impact de la régénération sur le rendement du moteur, l'invention propose aussi un procédé de régénération d'un filtre à particules pour un moteur à combustion interne, par lequel on commande, de façon cyclique, la mise en oeuvre de moyens de régénération appropriés dés que la valeur du niveau de chargement du filtre en particules produites par le moteur excède une valeur de seuil prédéterminée, caractérisé en ce que la valeur de seuil est variable en fonction d'au moins un paramètre de fonctionnement du moteur.

Selon d'autres caractéristiques de l'invention :
- la valeur de seuil est variable en fonction d'au moins un paramètre de fonctionnement du moteur ;
- au moins un paramètre de fonctionnement du moteur est représentatif de la température des gaz d'échappement qui traverse le filtre à particules ;
- un paramètre représentatif de la température des gaz d'échappement est fourni par un capteur température situé à proximité du filtre à particules ;
- au moins un paramètre de fonctionnement du moteur est représentatif de la charge du moteur ;
- une seconde plage sur laquelle s'étendent les valeurs de paramètres est divisée en au moins deux zones, une valeur de seuil de mise en oeuvre des moyens de régénération correspond à chacune desdites zones.

D'autres caractéristiques et avantages de l'invention apparaîtront à la lecture de la description détaillée qui suit pour la compréhension de laquelle on se reportera aux dessins annexés parmi lesquels :
- la figure 1 représente schématiquement une ligne d'échappement d'un moteur à combustion équipée d'un filtre à particules ;
- la figure 2 représente de façon schématique, l'évolution de la contre-pression provoquée par le changement du filtre à particules au cours du temps, lors du fonctionnement du moteur à combustion ;
- la figure 3 représente un graphique sur lequel sont notamment représentés des couples de valeurs constitués par la différence de pression entre l'entrée et la sortie du filtre à particules et par le débit des gaz d'échappement qui traverse le filtre à particules ;
- la figure 4 représente des évolutions de la perte de charge provoquée par le filtre, estimée à partir du débit déterminé des gaz d'échappement à travers le filtre à particules et de niveaux de chargement du filtre différents, ainsi que des valeurs moyennes des couples de valeurs déterminés depuis la régénération précédente.

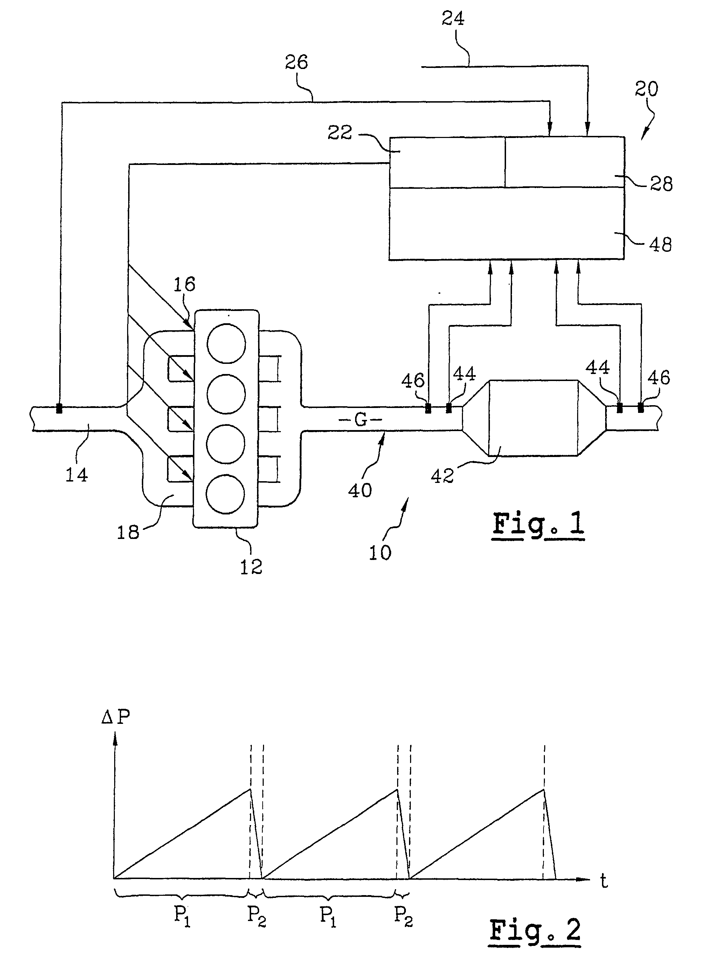

On a représenté sur la figure 1, un système de traitement 10 des gaz d'échappement G d'un moteur à combustion 12. Le moteur 12 est un moteur diesel ou un moteur à essence fonctionnant en mélange pauvre tel qu'un moteur à essence à injection directe.

Le moteur 12 est alimenté en air frais par un conduit d'admission 14. Des injecteurs 16 peuvent être agencés dans des tronçons aval 18 du conduit d'admission 14 ou directement dans les chambres de combustion du moteur 12 de façon à fournir au moteur 12 la quantité de carburant nécessaire à son fonctionnement.

Un système électronique de traitement d'informations 20 permet de gérer le fonctionnement du moteur 12.

Il peut notamment comporter un module 22 de détermination de la quantité de carburant injectée dans les chambres de combustion, en fonction notamment des conditions de fonctionnement du moteur 12 ainsi que d'informations 24, 26 représentatives de grandeurs telles que la position de la pédale d'accélérateur ou le débit d'air qui circule dans le conduit d'admission 14.

Le système électronique 20 comporte un module 28 qui permet notamment de traiter les informations 24, 26.

Une ligne 40 d'échappement permet l'évacuation des gaz G du moteur 12 vers l'atmosphère. Un système de traitement destiné à purifier les gaz d'échappement G est interposé dans la ligne 40. Il se compose principalement d'un filtre à particules 42

Un catalyseur d'oxydation, non représenté, peut être inséré dans la ligne 40 d'échappement en amont du filtre à particules 42.

Le filtre à particules 42 peut aussi être recouvert d'une substance catalytique.

Le filtre à particules 42 se présente avec une face d'entrée et une face de sortie des gaz G. Il est composé par exemple de canaux alternativement bouchés et ouverts en entrée et qui sont inversement ouverts et bouchés en sortie. Les parois du filtre à particules 42 sont poreuses.

Des moyens de mesure, tels que des capteurs de pression 44 et des capteurs de température 46, sont disposés sur la ligne d'échappement 40 en amont et en aval du filtre à particules 42 et sont reliés à un module 48 de traitement du système électronique 20.

Le fonctionnement du système de traitement 10 est ie suivant.

Il se décompose en deux phases P1, P2 représentées de façon schématique à la figure 2.

Les gaz d'échappement G produits par le moteur 12 sont envoyés dans la ligne 40.

Au cours de la première phase de traitement P1 les particules contenues dans les gaz G sont arrêtées par les parois poreuses du filtre 42.

Périodiquement, les particules ainsi piégées dans le filtre à particules 42 sont détruites par combustion au cours d'une seconde phase P2 de régénération.

Les moyens de mesure 44, 46 transmettent au système électronique 20 des informations représentatives de la pression et de la température respectivement aux bornes du filtre à particules 42.

Le procédé selon l'invention permet de déterminer périodiquement le niveau de chargement du filtre à particules 42, selon les étapes suivantes :
- détermination périodique de la différence de pression ΔP_{idet} entre l'entrée et la sortie du filtre à particules 42, et détermination périodique du débit Q_{idet} des gaz d'échappement G qui traverse le filtre à particules 42 de façon à former un couple (ΔP_{idet}, Q_{idet}) de valeurs de mesure,
- estimation, pour chaque valeur de débit Q_{idet} de chaque couple (ΔP_{idet}, Q_{idet}), d'au moins une première ΔP₁ₑₛₜ et une seconde ΔP₂ₑₛₜ différence de pression à partir du modèle mathématique suivant définissant la kième différence de pression, ΔPₖₑₛₜ=(a₂₁*NIVₖ²+a₁₁*NIVₖ+a₀₁)*Q_{idet}²+ (a₂₁*NIVₖ²+a₁₀*NIVₖ+a₀₀)*Q_{idet} dans lequel
   ΔPₖₑₛₜ est la kième différence de pression entre l'entrée et la sortie du filtre à particules,
   les aₗₘ sont des constantes déterminées,
   Q_{idet} est le débit déterminé des gaz d'échappement qui traverse le filtre à particules, et
   NIVₖ est égal au kième niveau de chargement correspondant sensiblement au niveau de chargement du filtre 42 déterminé au cours de la période de détermination du niveau de chargement précédente, le niveau de chargement de ladite période précédente étant nul lors de la première utilisation du filtre à particules ;
      - détermination, pour chaque valeur de débit mesurée Q_{idet}, d'au moins une première Δ₁ et une seconde Δ₂ différences correspondant d'une part à la différence entre la différence de pression mesurée ΔP_{idet} et la première différence de pression estimée ΔP₁ₑₛₜ et, d'autre part, à la différence entre la différence de pression mesurée ΔP_{idet} et la seconde différence de pression estimée ΔP₂ₑₛₜ respectivement ;
      - calcul, à la fin de la période de détermination du niveau de chargement du filtre à particules 42, d'au moins une première somme Σ₁ et une deuxième somme Σ₂ correspondant à la somme desdites première Δ₁ et seconde Δ₂ différences respectivement au cours de ladite période ;
le niveau de chargement NIV du filtre à particules 42 déterminé étant égal au niveau de chargement NIVₖ correspondant à la somme Σ₁, Σ₂ la plus petite.

Le modèle mathématique mettant en relation la différence de pression ΔP entre l'entrée et la sortie du filtre à particules, le débit Q des gaz d'échappement qui traverse le filtre 42 et le niveau de chargement NIV du filtre à particules 42 est obtenu par expérimentation.

La détermination directe du niveau de chargement NIV du filtre à particules 42 à partir de ce modèle mathématique n'est pas satisfaisante car une petite erreur sur la valeur de la différence de pression ΔP mesurée provoque une erreur importante du niveau de chargement NIV.

Les étapes suivantes du procédé selon l'invention permettent de minimiser le risque éventuel d'erreur.

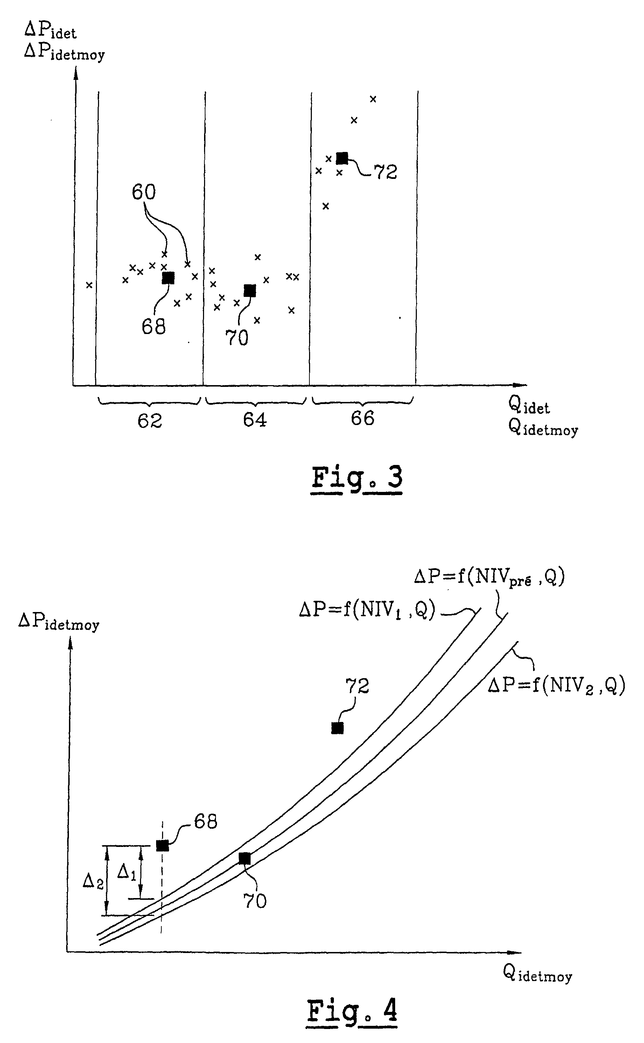

La figure 3 représente par des croix 60 les couples (ΔP_{idet}, Q_{idet}) mesurés au cours d'une période de détermination du niveau de chargement NIV du filtre à particules 42 lors de la phase de traitement.

La période de mesure des couples (ΔP_{idet}, Q_{idet}) peut être de l'ordre de la seconde et la période de détermination du niveau de chargement NIV peut être de l'ordre de quelques minutes.

Selon une variante, de façon à diminuer les calculs effectués par le système électronique 20, des couples moyens (ΔP_{idetmoy}, Q_{idetmoy}) sont calculés.

Pour ce faire, une première plage dans laquelle s'étendent les valeurs de débit mesurées Q_{idet}, est divisée en plusieurs zones. Ici, la première plage est divisée en trois zones désignées par les références 62, 64 et 66 respectivement.

Dans chacune des trois zones 62, 64 et 66 on calcule un couple moyen (ΔP_{idetmoy}, Q_{idetmoy}) 68, 70 et 72 respectivement, représentés par des rectangles sur la figure 3.

La différence de pression moyenne ΔP_{idetmoy} entre l'entrée et la sortie du filtre à particules 42 correspond à la moyenne des différences de pression mesurées ΔP_{idet} dans la zone correspondante au cours de la période de détermination du niveau de chargement du filtre à particules 42.

Le débit moyen Q_{idetmoy} des gaz de d'échappement qui traverse le filtre à particules est calculé de façon similaire à partir des débits mesurés Q_{idet} dans la zone correspondante.

Ainsi, la première Δ₁ et la seconde Δ₂ différences ne sont ici calculées que pour les trois valeurs mesurées de débits moyens.

Les première et seconde sommes Σ₁, Σ₂ correspondent aux sommes des valeurs absolues des premières Δ₁ et secondes Δ₂ différences respectivement.

Les première et seconde sommes Σ₁, Σ₂ peuvent aussi correspondre aux sommes des carrés des différences entre les différences de pression mesurées ΔP_{idet} et les premières différences de pression estimées ΔP₁ₑₛₜ et des différences entre les différences de pression mesurées ΔP_{idet} et les secondes différences de pression estimées ΔP₂ₑₛₜ respectivement.

Le premier niveau de chargement NIV₁ peut être égal au niveau de chargement NIV_{pré} déterminé lors de la période de détermination du niveau de chargement précédent augmenté d'un premier niveau de chargement résiduel ΔNIVₐ. On a alors NIV₁= NIV_{pré}+ΔNIVₐ.

L'évolution de la perte de charge ΔP provoquée par le filtre à particules 42, en fonction du niveau de chargement NIV_{pré} déterminé lors de la période de détermination du niveau de chargement précédent et du débit Q des gaz G est représenté à la figure 4.

Le deuxième niveau de chargement NIV₂ peut être égal au niveau de chargement NIV_{pré} déterminer lors de la période de détermination du niveau de chargement précédent diminué d'un deuxième niveau de chargement résiduel ΔNIV_{b}. On a alors NIV₂= NIV_{pré}-ΔNIV_{b}.

La figure 4 propose trois courbes qui représentent la perte de charge ΔP aux bornes du filtre à particules 42 en fonction du débit Q des gaz d'échappement, pour trois niveaux de chargement NIV_{pré}, NIV₁ et NIV₂ différents du filtre 42.

Pratiquement le premier ΔNIVₐ et le deuxième ΔNIV_{b} niveaux de chargement résiduel sont avantageusement inférieurs à la moitié de la précision requise pour la détermination du niveau de chargement.

De plus, le premier ΔNIVₐ niveau de chargement résiduel est inférieur ou égal à l'augmentation maximale du niveau de chargement NIV du filtre à particules 42 au cours de la période de détermination du niveau de chargement.

Conformément à la figure 4, le premier ΔNIVₐ et deuxième ΔNIV_{b} niveaux de chargement résiduel peuvent être égaux.

Ici, la différence de pression ΔP_{idet} entre l'entrée et la sortie du filtre à particules 42 et le débit Q_{idet} des gaz d'échappement G qui traverse le filtre à particules 42 peuvent être déterminés par les capteurs de pression 46 et par un capteur de débit, non représenté, qui fournissent une information représentative de la différence de pression ΔP_{idet} et du débit Q_{idet} des gaz d'échappement G respectivement.

Cependant, la différence de pression ΔP_{idet} et le débit Q_{idet} des gaz d'échappement G peuvent être déterminés par calcul à partir de paramètres du moteur 12 tels que le régime du moteur, le débit volumique des gaz d'échappement G et/ou d'informations mesurées telles que l'information 26 représentative du débit d'air qui circule dans le conduit d'admission 14.

Dans la description qui précède, le niveau de chargement NIV du filtre à particules 42 est déterminé par comparaison des deux sommes Σ₁, Σ₂. Cependant ce mode de réalisation n'est pas limitatif. En effet, il est possible que le niveau de chargement NIV du filtre à particules 42 soit déterminé par la comparaison de plus de deux sommes Σ.

L'une des sommes Σ peut être obtenue à partir d'une différence de pression estimée ΔPₖₑₛₜ pour laquelle le kième niveau de chargement correspondant au niveau de chargement NIV_{pré} du filtre 42 déterminé au cours de la période de détermination du niveau de chargement précédente.

Ainsi, selon le procédé de l'invention, le système électronique 20 permet de déterminer périodiquement le niveau de chargement NIV du filtre à particules 42 de façon précise. En effet, le procédé selon l'invention permet de limiter fortement l'influence des incertitudes de mesure et de calcul et ainsi de réduire les imprécisions de détermination niveau de chargement NIV.

Le système électronique 20 compare ensuite le niveau de chargement NIV déterminé avec une valeur de seuil prédéterminée. Lorsque le niveau de chargement NIV est supérieur à la valeur de seuil prédéterminée, la phase de régénération du filtre à particules 42 est initiée.

La régénération du filtre à particules 42 nécessite d'atteindre une température des gaz d'échappement supérieure ou égale à la température de combustion des particules, c'est-à-dire d'environ 550°C. Il faut donc, dans certains cas, diminuer la température de combustion des particules pour favoriser la phase de régénération, ou augmenter la température des gaz d'échappement par des moyens de chauffage additionnels.

Plusieurs solutions peuvent être mises en oeuvre de façon indépendante ou concomitante.

L'ajout dans le carburant d'un additif chimique particulier permet d'augmenter les cinétiques de combustion des particules et par conséquent d'abaisser leur température de combustion sur le filtre à particules 42.

Le filtre à particules 42 peut être recouvert d'une imprégnation particulière appelée phase catalytique qui permet d'abaisser la température de combustion des particules. À titre d'exemple, on peut envisager l'utilisation d'un catalyseur métallique supporté par le filtre 42.

Les moyens de chauffage additionnels peuvent consister en une résistance électrique, non représentée, notamment des grilles chauffantes, qui est agencée en amont du filtre à particules 42 et qui permet d'augmenter la température des gaz d'échappement à une valeur suffisante pour provoquer la combustion des particules dans le filtre 42.

Les moyens de chauffage additionnels peuvent encore consister en l'injection d'une quantité supplémentaire de carburant dans au moins une des chambres de combustion. Cette injection peut être réalisée sous la forme d'une post-injection.

Le système électronique 20 permet de gérer les moyens de chauffage additionnels en fonction par exemple du régime du moteur 12 et de la température du filtre à particules 42.

La température du filtre à particules 42 peut être estimée à partir des valeurs fournies par les capteurs de température 46 agencés en amont et en aval du filtre à particules 42.

De façon à minimiser encore l'impact de la régénération sur le rendement du moteur 12, l'invention propose un procédé de régénération du filtre à particules 42 pour le moteur à combustion interne 12, par lequel on commande, de façon cyclique, la mise en oeuvre de moyens de régénération appropriés dés que la valeur du niveau de chargement NIV du filtre 42 en particules produites par le moteur 12 excède une valeur de seuil prédéterminée S, la valeur de seuil S étant variable en fonction d'au moins un paramètre de fonctionnement du moteur 12.

L'impact de la régénération du filtre à particules 42 dépend des conditions de fonctionnement du moteur 12. En effet, selon les conditions, il est nécessaire de chauffer plus ou moins, c'est-à-dire de grever plus ou moins les performances du moteur 12 respectivement, les gaz d'échappement G de façon à provoquer la combustion des particules stockées dans le filtre 42.

Un paramètre de fonctionnement du moteur 12 peut être représentatif de la température des gaz d'échappement qui traversent le filtre à particules 42. Le paramètre représentatif de la température des gaz d'échappement G peut être fourni par un capteur de température 46 situé à proximité du filtre à particules 42.

Un autre paramètre de fonctionnement du moteur 12 peut être représentatif de la charge du moteur 12.

En effet, lorsque le moteur 12 fonctionne à forte charge l'énergie supplémentaire à fournir pour permettre la régénération du filtre à particules 42 est inférieure à l'énergie supplémentaire à fournir lorsque le moteur 12 fonctionne à faible charge.

L'invention propose alors que la valeur de seuil S soit variable en fonction d'au moins un paramètre de fonctionnement du moteur 12.

Lorsqu'un paramètre de fonctionnement du moteur 12 est favorable à la régénération du filtre à particules 42, la valeur de seuil S est plus faible que lorsque ledit paramètre de fonctionnement du moteur 12 est moins favorable à la régénération du filtre 42.

Ainsi, la valeur de seuil S est d'autant plus faible que ledit paramètre de fonctionnement est favorable à la régénération du filtre à particules 42.

Pour un niveau de chargement déterminé du filtre à particules 42 la régénération peut être initiée ou non, selon l'état dudit paramètre de fonctionnement du moteur 12 dont dépend la valeur de seuil S.

Prenons par exemple un paramètre dont les valeurs s'étendent dans une seconde plage. À chacune de ces valeurs correspond une valeur de seuil. Les valeurs de seuil seront d'autant plus faibles que la valeur du paramètre est favorable à la régénération du filtre à particules 42.

Il est possible de diviser la seconde plage en plusieurs zones à chacune desquelles correspond une valeur de seuil.

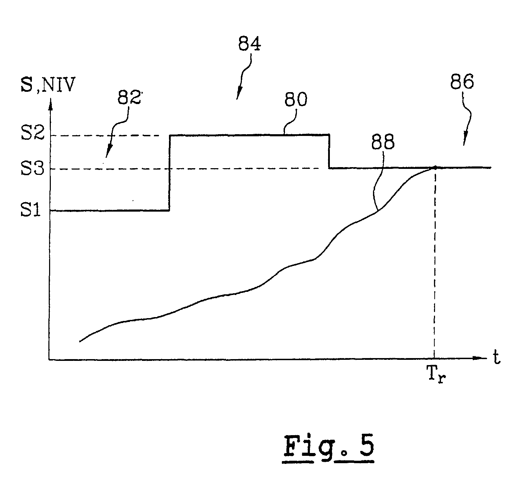

La figure 5 représente en trait fort 80 l'évolution de la valeur de seuil au cours du temps Ce graphique est donné pour un parcours routier déterminé pendant lequel un paramètre du moteur évolue.

Ici, on observe trois zones.

Une première zone 82 présente une première valeur de seuil S1. Une deuxième zone 84 présente une deuxième valeur de seuil S2 qui est supérieure à la première valeur de seuil S1. Cela signifie que les conditions de fonctionnement du moteur 12 sont moins favorables à la régénération du filtre à particules 42 dans la deuxième zone 84 que dans la première zone 82.

Une troisième zone 86 présente une troisième valeur de seuil S3 qui est comprise entre la première S1 et la seconde S2 valeur de seuil.

Un trait fin 88 représente le niveau de chargement du filtre à particules 42 au cours du temps.

Dans ce cas, la mise en oeuvre des moyens de régénération du filtre à particules 42 est réalisée, à l'instant Tr, lorsque le niveau de chargement NIV du filtre à particules 42 atteint le troisième seuil S3.

Par rapport à l'état de la technique, le procédé selon l'invention permet ainsi de retarder la mise en oeuvre des moyens de régénération lorsque les conditions de régénération sont défavorables et d'anticiper leur mise en oeuvre lorsque les conditions de régénération sont favorables.

L'impact de la régénération du filtre à particules 42 sur le rendement du moteur 12 est ainsi minimisé.

## Revendications

1. Procédé de régénération d'un filtre à particules (42) pour un moteur (12) à combustion interne, grâce auquel on commande, de façon cyclique, la mise en oeuvre de moyens de régénération appropriés dés que la valeur du niveau de chargement du filtre (42) en particules produites par le moteur (12) excède une valeur de seuil (S) prédéterminée, dans lequel la détermination du niveau de chargement du filtre à particules (42) est réalisée périodiquement selon les étapes suivantes :
- détermination périodique de la différence de pression (ΔP_{idet}) entre l'entrée et la sortie du filtre à particules (42), et détermination périodique du débit (Q_{idet}) des gaz d'échappement (G) qui traverse le filtre à particules (42) de façon à former un couple (ΔP_{idet}, Q_{idet}) de valeurs de mesure ;
- estimation, pour chaque valeur de débit (Q_{idet}) de chaque couple (ΔP_{idet}, Q_{idet}), d'au moins une première (ΔP₁ₑₛₜ) et une seconde (ΔP₂ₑₛₜ) différence de pression à partir du modèle mathématique suivant définissant la kième différence de pression, ΔPₖₑₛₜ=(a₂₁*NIVₖ²+a₁₁*NIVₖ+a₀₁)*Q_{idet}²+ (a₂₁*NIVₖ²+a₁₀*NIVₖ+a₀₀)*Q_{idet} dans lequel
ΔPₖₑₛₜ est la kième différence de pression entre l'entrée et la sortie du filtre à particules,
les aₗₘ sont des constantes déterminées,
Q_{idet} est le débit déterminé des gaz d'échappement qui traverse le filtre à particules, et
NIVₖ est égal au kième niveau de chargement correspondant sensiblement au niveau de chargement du filtre (42) déterminé au cours de la période de détermination du niveau de chargement (NIV) précédente, le niveau de chargement de ladite période précédente étant nul lors de la première utilisation du filtre à particules ;
- détermination, pour chaque valeur de débit déterminée (Q_{idet}), d'au moins une première (Δ₁) et une seconde (Δ₂) différences correspondant d'une part à la différence entre la différence de pression déterminée (ΔP_{idet}) et la première différence de pression estimée (ΔP₁ₑₛₜ) et, d'autre part, à la différence entre la différence de pression déterminée (ΔP_{idet}) et la seconde différence de pression estimée (ΔP₂ₑₛₜ) respectivement ;
- calcul, à la fin de la période de détermination du niveau de chargement (NIV) du filtre à particules (42), d'au moins une première (Σ₁) et une deuxième (Σ₂) sommes correspondant à la somme desdites premières (Δ₁) et secondes (Δ₂) différences respectivement au cours de ladite période ;
le niveau de chargement (NIV) du filtre à particules (42) déterminé étant égal au niveau de chargement (NIVₖ) correspondant à la somme (Σ₁, Σ₂) la plus petite.

2. Procédé de régénération d'un filtre à particules (42) selon la revendication précédente, **caractérisé en ce que** les valeurs de débit déterminées (Q_{idet}) s'étendent dans une première plage qui est divisée en au moins deux zones (62, 64, 66), et **en ce que** dans chacune des zones on calcule un couple moyen (ΔP_{idetmoy}, Q_{idetmoy}) de valeurs dans lequel la différence de pression moyenne (ΔP_{idetmoy}) entre l'entrée et la sortie du filtre à particules correspond à la moyenne des différences de pression déterminées (ΔP_{idet}) dans la zone correspondante, et dont le débit moyen (Q_{idetmoy}) des gaz d'échappement qui traverse le filtre à particules (42) correspond à la moyenne des débits déterminés (Q_{idet}) dans la zone correspondante, les valeurs moyennes (ΔP_{idetmoy}, Q_{idetmoy}) étant calculées dans la période de détermination du niveau de chargement (NIV) du filtre à particules (42).

3. Procédé de régénération d'un filtre à particules (42) selon l'une des revendications 1 ou 2, **caractérisé en ce que** le premier niveau de chargement (NIV₁) est égal au niveau de chargement (NIV_{pré}) déterminé lors de la période de détermination du niveau de chargement précédent, augmenté d'un premier niveau de chargement résiduel (ΔNIVₐ).

4. Procédé de régénération d'un filtre à particules (42) selon l'une quelconque des revendications précédentes, **caractérisé en ce que** le deuxième niveau de chargement (NIV₂) est égal au niveau de chargement (NIV_{pré}) déterminé lors de la période de détermination du niveau de chargement précédent, diminué d'un deuxième niveau de chargement résiduel (ΔNIV_{b}).

5. Procédé de régénération d'un filtre à particules (42) selon les revendications 3 et 4, **caractérisé en ce que** le premier et le deuxième niveau de chargement résiduel (ΔNIVₐ, ΔNIV_{b}) sont égaux.

6. Procédé de régénération d'un filtre à particules (42) selon l'une quelconque des revendications précédentes, **caractérisé en ce que**, lorsque la première et la deuxième somme (Σ₁, Σ₂) sont égales, le niveau de chargement (NIV) du filtre à particules (42) correspond au niveau de chargement déterminé (NIV_{pré}) lors de la période de détermination précédente.

7. Procédé de régénération d'un filtre à particules (42) selon l'une quelconque des revendications précédentes, **caractérisé en ce que** la première période de détermination du niveau de chargement est de l'ordre de quelques minutes.

8. Procédé de régénération d'un filtre à particules (42) selon l'une quelconque des revendications précédentes, **caractérisé en ce que** la seconde période de détermination de la différence de pression (ΔP_{idet}) entre l'entrée et la sortie du filtre à particules (42) et de détermination du débit (Q_{idet}) des gaz d'échappement (G) qui traverse le filtre à particules (42) est de l'ordre de la seconde.

9. Procédé de régénération d'un filtre à particules (42) selon l'une quelconque des revendications précédentes, **caractérisé en ce que** la différence de pression (ΔP_{idet}) entre l'entrée et la sortie du filtre à particules (42) et/ou le débit (Q_{idet}) des gaz d'échappement qui traverse le filtre à particules (42) sont déterminés par des capteurs (44) qui fournissent une information représentative de la différence de pression (ΔP_{idet}) et du débit (Q_{idet}) des gaz d'échappement (G) respectivement.

10. Procédé de régénération d'un filtre à particules (42) selon l'une quelconque des revendications précédentes, **caractérisé en ce que** la différence de pression (ΔP_{idet}) entre l'entrée et la sortie du filtre à particules (42) et/ou le débit (Q_{idet}) des gaz d'échappement qui traverse le filtre à particules (42) sont déterminés par calcul à partir de paramètres du moteur et/ou d'informations mesurées.

11. Procédé de régénération d'un filtre à particules (42) selon l'une quelconque des revendications 1 à 10, **caractérisé en ce que** la valeur de seuil (S) est variable en fonction d'au moins un paramètre de fonctionnement du moteur (12).

12. Procédé de régénération selon la revendication précédente, **caractérisé en ce qu'**au moins un paramètre de fonctionnement du moteur (12) est représentatif de la température des gaz d'échappement (G) qui traverse le filtre à particules (42)

13. Procédé de régénération selon la revendication précédente, **caractérisé en ce qu'**un paramètre représentatif de la température des gaz d'échappement (G) est fourni par un capteur température situé à proximité du filtre à particules (42).

14. Procédé de régénération selon l'une des revendications 12 ou 13, **caractérisé en ce qu'**au moins un paramètre de fonctionnement du moteur (12) est représentatif de la charge du moteur (12).

15. Procédé de régénération d'un filtre à particules (42) selon l'une quelconque des revendications 11 à 14, **caractérisé en ce qu'**une seconde plage sur laquelle s'étendent les valeurs de paramètres est divisée en au moins deux zones (82, 84, 86), et **en ce qu'**une valeur de seuil (S1, S2, S3) de mise en oeuvre des moyens de régénération correspond à chacune desdites zones(82, 84, 86).

## Claims

1. A process for the regeneration of a particulate filter (42) for an internal combustion engine (12), by means of which operation of suitable regeneration means is controlled cyclically as soon as the value of the loading level of the filter (42) with particles produced by the engine (12) exceeds a predetermined threshold value (S), in which the step of determining the loading level of the particulate filter (42) is effected periodically in accordance with the following steps:
- periodically determining the pressure difference (ΔP_{idet}) between the intake and the outlet of the particulate filter (42) and periodically determining the flow rate (Q_{idet}) of the exhaust gases (G) which passes through the particulate filter (42) so as to form a pair (ΔP_{idet}, Q_{idet}) of measurement values;
- estimating for each flow rate value (Q_{idet}) of each pair (ΔP_{idet}, Q_{idet}) at least a first (ΔP₁ₑₛₜ) and a second (Δ₂ₑₛₜ) pressure difference from the following mathematical model defining the k-th pressure difference, ΔPₖₑₛₜ=(a₂₁*NIVₖ²+a₁₁*NIVₖ+a₀₁)*Q_{idet}²+(a₂₁*NIVₖ²+a₁₀*NIVₖ+a₀₀)*Q_{idet},
in which
ΔPₖₑₛₜ is the k-th pressure difference between the intake and the outlet of the particulate filter,
the aₗₘ are given constants,
Q_{idet} is the given flow rate of the exhaust gases, which passes through the particulate filter, and
NIVₖ is equal to the k-th loading level corresponding substantially to the loading level of the filter (42) which is determined in the course of the preceding period of determining the loading level (NIV), the loading level of said preceding period being zero upon first use of the particulate filter;
- determining for each given flow rate value (Q_{idet}) at least a first (Δ₁) and a second (Δ₂) difference corresponding on the one hand to the difference between the given pressure difference (ΔP_{idet}) and the first estimated pressure difference (ΔP₁ₑₛₜ) and on the other hand the difference between the given pressure difference (ΔP_{idet}) and the second estimated pressure difference (ΔP₂ₑₛₜ) respectively; and
- calculating at the end of the period of determining the loading level (NIV) of the particulate filter (42) at least a first (Σ₁) and a second (Σ₂) sum corresponding to the sum of said first (Δ₁) and second (Δ₂) differences respectively in the course of said period;
the loading level (NIV) of the particulate filter (42) which is determined being equal to the loading level (NIVₖ) corresponding to the smallest sum (Σ₁), (Σ₂).

2. A process for the regeneration of a particulate filter (42) according to the preceding claim **characterised in that** the given flow rate values (Q_{idet}) extend in a first range which is divided into at least two zones (62, 64, 66) and that in each of the zones there is calculated a mean pair (ΔP_{idetmoy}, Q_{idetmoy}) of values in which the mean pressure difference ((ΔP_{idetmoy}) between the intake and the outlet of the particulate filter corresponds to the mean of the given pressure differences (ΔP_{idet}) in the corresponding zone, and of which the mean flow rate (Q_{idetmoy}) of the exhaust gases, which passes through the particulate filter (42), corresponds to the mean of the given flow rates (Q_{idet}) in the corresponding zone, the mean values (ΔP_{idetmoy}, Q_{idetmoy}) being calculated in the period of determining the loading level (NIV) of the particulate filter (42).

3. A process for the regeneration of a particulate filter (42) according to one of claims I and 2 **characterised in that** the first loading level (NIV₁) is equal to the loading level (NTVₚᵣₑ) which is determined in the period of determining the preceding loading level, increased by a first residual loading level (ΔNIVₐ).

4. A process for the regeneration of a particulate filter (42) according to any one of the preceding claims **characterised in that** the second loading level (NIV₂) is equal to the loading level (NIVₚᵣₑ) which is determined in the period of determining the preceding loading level, reduced by a second residual loading level (ΔNIV_{b}).

5. A process for the regeneration of a particulate filter (42) according to claims 3 and 4 **characterised in that** the first and second residual loading levels (ΔNIVₐ, ΔNIV_{b}) are equal.

6. A process for the regeneration of a particulate filter (42) according to any one of the preceding claims **characterised in that**, when the first and second sums (Σ₁, Σ₂) are equal, the loading level (NIV) of the particulate filter (42) corresponds to the loading level (NIVₚᵣₑ) which is determined in the preceding determination period.

7. A process for the regeneration of a particulate filter (42) according to any one of the preceding claims **characterised in that** the first period of determining the loading level is of the order of a few minutes.

8. A process for the regeneration of a particulate filter (42) according to any one of the preceding claims **characterised in that** the second period of determining the pressure difference (ΔP_{idet}) between the intake and the outlet of the particulate filter (42) and for determining the flow rate (Q_{idet}) of the exhaust gases (G) which passes through the particulate filter (42) is of the order of a second.

9. A process for the regeneration of a particulate filter (42) according to any one of the preceding claims **characterised in that** the pressure difference (ΔP_{idet}) between the intake and the outlet of the particulate filter (42) and/or the flow rate (Q_{idet}) of the exhaust gases which passes through the particulate filter (42) are determined by sensors (44) which supply information representative of the pressure difference (ΔP_{idet}) and the flow rate Q_{idet}) of the exhaust gases (G) respectively.

10. A process for the regeneration of a particulate filter (42) according to any one of the preceding claims **characterised in that** the pressure difference (ΔP_{idet}) between the intake and the outlet of the particulate filter (42) and/or the flow rate (Q_{idet}) of the exhaust gases which passes through the particulate filter (42) are determined by calculation from parameters of the engine and/or measured items of information.

11. A process for the regeneration of a particulate filter (42) according to any one of claims 1 to 10 **characterised in that** the threshold value (S) is variable in dependence on at least one operating parameter of the engine (12).

12. A regeneration process according to the preceding claim **characterised in that** at least one operating parameter of the engine (12) is representative of the temperature of the exhaust gases (G) which passes through the particulate filter (42).

13. A regeneration process according to the preceding claim **characterised in that** a parameter representative of the temperature of the exhaust gases (G is provided by a temperature sensor disposed in the proximity of the particulate filter (42).

14. A regeneration process according to one of claims 12 and 13 **characterised in that** at least one operating parameter of the engine (12) is representative of the load on the engine (12).

15. A process for the regeneration of a particulate filter (42) according to any one of claims 11 to 14 **characterised in that** a second range over which the values of parameters extend is divided into at least two zones (82, 84, 86) and that a threshold value (S1, S2, S3) for bringing the regeneration means into operation corresponds to each of said zones (82, 84, 86).

## Patentansprüche

1. Verfahren zur Regenerierung eines Partikelfilters (42) für einen Verbrennungsmotor (12), mit dem sich auf zyklische Weise die Durchführung geeigneter Regenerierungsmaßnahmen steuern lässt, sobald der Wert des Verschmutzungsgrades des Filters (42) mit vom Motor (12) produzierten Partikeln einen vorgegebenen Schwellenwert (S) übersteigt, bei dem die Ermittlung des Verschmutzungsgrades des Partikelfilters (42) periodisch gemäß folgendender Schritte durchgeführt wird:
- periodische Ermittlung des Druckunterschiedes (ΔP_{idet}) zwischen dem Eingang und dem Ausgang des Partikelfilters (42), und periodische Ermittlung des Durchsatzes (Q_{idet}) an Abgasen (G), die den Partikelfilter (42) passieren, um ein Messwertepaar (ΔP_{idet}, Q_{idet}) zu bilden;
- Schätzung, für jeden Durchsatzwert (Q_{idet}) eines jeden Paares (ΔP_{idet}, Q_{idet}), mindestens eines ersten (ΔP₁ₑₛₜ) und eines zweiten (ΔP₂ₑₛₜ) Druckunterschiedes, wobei von folgendem mathematischen Modell ausgegangen wird, das den k-ten Druckunterschied definiert: ΔPₖₑₛₜ=(a₂₁*NIVₖ²+a₁₁*NIVₖ+a₀₁)*Q_{idet}²+(a₂₁*NIVₖ²+a₁₀*NIVₖ+a₀₀) *Q_{idet}, dabei ist
ΔPₖₑₛₜ der k-te Druckunterschied zwischen dem Eingang und dem Ausgang des Partikelfilters,
sind die aₗₘ bestimmte Konstanten, und
ist Q_{idet} der ermittelte Durchsatz an Abgasen, die den Partikelfilter passieren, und
ist NIVₖ der k-te Verschmutzungsgrad, der deutlich dem Verschmutzungsgrad des Filters (42) entspricht, der während der vorhergehenden Verschmutzungsgrad-Ermittlungsperiode ermittelt wurde, wobei der Verschmutzungsgrad dieser vorhergehenden Periode bei der ersten Benutzung des Partikelfilters null ist;
- Ermittlung, für jeden ermittelten Durchsatzwert (Q_{idet}), von mindestens einem ersten (Δ₁) und einem zweiten (Δ₂) Unterschied, die dem Unterschied zwischen dem ermittelten Druckunterschied (ΔPᵢ₋ _{det}) und dem ersten geschätzten Druckunterschied (ΔP₁ₑₛₜ), beziehungsweise dem Unterschied zwischen dem ermittelten Druckunterschied (ΔP_{idet}) und dem zweiten geschätzten Druckunterschied (ΔP₂ₑₛₜ) entsprechen;
- Berechnung, am Ende der Periode der Ermittlung des Verschmutzungsgrades (NIV) des Partikelfilters (42), mindestens einer ersten (Σ₁) und einer zweiten (Σ₂) Summe, die der Summe der oben genannten ersten (Δ₁) bzw. zweiten (Δ₂) Unterschiede während dieser Periode entsprechen;
wobei der ermittelte Verschmutzungsgrad (NIV) des Partikelfilters (42) gleich dem der kleinsten Summe (Σ₁, Σ₂) entsprechenden Verschmutzungsgrad (NIVₖ) ist.

2. Verfahren zur Regenerierung eines Partikelfilters (42) nach dem vorhergehenden Anspruch, **dadurch gekennzeichnet, dass** sich die ermittelten Durchsatzwerte (Q_{idet}) auf einen ersten Bereich erstrecken, der in mindestens zwei Zonen aufgeteilt ist (62, 64, 66), und **dadurch gekennzeichnet, dass** man in jeder dieser Zonen ein Durchschnittswertepaar (ΔP_{idetmoy}, Qᵢ₋ _{detmoy}) berechnet, in dem der Unterschied des durchschnittlichen Drucks (ΔP_{idetmoy}) zwischen dem Eingang und dem Ausgang des Partikelfilters (42) dem Durchschnitt der ermittelten Druckunterschiede (ΔP_{idet}) in der korrespondierenden Zone entspricht, und bei dem der mittlere Durchsatz (Q_{idetmoy}) an Abgasen, die den Partikelfilter (42) passieren, dem Durchschnitt des in der korrespondierenden Zone ermittelten Durchsatzes (Q_{idet}) entspricht, wobei die Durchschnittswerte (ΔP_{idetmoy}, Q_{idetmoy}) in der Periode der Ermittlung des Verschmutzungsgrades (NIV) des Partikelfilters (42) berechnet werden.

3. Verfahren zur Regenerierung eines Partikelfilters (42) nach einem der Ansprüche 1 oder 2, **dadurch gekennzeichnet, dass** der erste Verschmutzungsgrad (NIV₁) gleich dem Verschmutzungsgrad (NIVₚᵣₑ) ist, der in der vorhergehenden Periode der Ermittlung des Verschmutzungsgrades ermittelt wurde, erhöht um einen ersten Rest-Verschmutzungsgrad (ΔNIVₐ).

4. Verfahren zur Regenerierung eines Partikelfilters (42) nach einem der vorhergehenden Ansprüche, **dadurch gekennzeichnet, dass** der zweite Verschmutzungsgrad (NIV₂) gleich dem ersten Verschmutzungsgrad (NIVₚᵣₑ) ist, der während der vorhergehenden Periode der Ermittlung des Verschmutzungsgrades ermittelt wurde, vermindert um einen zweiten Rest-Verschmutzungsgrad (ΔNIV_{b}).

5. Verfahren zur Regenerierung eines Partikelfilters (42) nach den Ansprüchen 3 und 4, **dadurch gekennzeichnet, dass** der erste und der zweite Rest-Verschmutzungsgrad (ΔNIVₐ, ΔNIV_{b}) gleich sind.

6. Verfahren zur Regenerierung eines Partikelfilters (42) nach einem der vorhergehenden Ansprüche, **dadurch gekennzeichnet, dass** der Verschmutzungsgrad (NIV) des Partikelfilters (42) dem während der vorhergehenden Ermittlungsperiode ermittelten Verschmutzungsgrad entspricht, wenn die erste und die zweite Summé (Σ₁, Σ₂) gleich sind.

7. Verfahren zur Regenerierung eines Partikelfilters (42) nach einem der vorhergehenden Ansprüche, **dadurch gekennzeichnet, dass** die erste Periode der Ermittlung des Verschmutzungsgrades in der Größenordnung von einigen Minuten liegt.

8. Verfahren zur Regenerierung eines Partikelfilters (42) nach einem der vorhergehenden Ansprüche, **dadurch gekennzeichnet, dass** die zweite Periode der Ermittlung des Druckunterschiedes (ΔP_{idet}) zwischen dem Eingang und dem Ausgang des Partikelfilters (42) und der Ermittlung des Durchsatzes (Q_{idet}) an Abgasen (G), die den Partikelfilter (42) passieren, in der Größenordnung von einer Sekunde liegt.

9. Verfahren zur Regenerierung eines Partikelfilters (42) nach einem der vorhergehenden Ansprüche, **dadurch gekennzeichnet, dass** der Druckunterschied (ΔP_{idet}) zwischen dem Eingang und dem Ausgang des Partikelfilters (42) und/oder der Durchsatz an Abgasen, die den Partikelfilter (42) passieren, von Messfühlern ermittelt werden, die eine für den Druckunterschied (ΔP_{idet}) bzw. den Durchsatz (Q_{idet}) an Abgasen (G) repräsentative Information liefern.

10. Verfahren zur Regenerierung eines Partikelfilters (42) nach einem der vorhergehenden Ansprüche, **dadurch gekennzeichnet, dass** der Druckunterschied (ΔP_{idet}) zwischen dem Eingang und dem Ausgang des Partikelfilters (42) und/oder der Durchsatz (Q_{idet}) an Abgasen, die den Partikelfilter (42) passieren, durch eine Berechnung ermittelt werden, ausgehend von Parametern des Motors und/oder der gemessenen Informationen.

11. Verfahren zur Regenerierung eines Partikelfilters (42) nach einem der Ansprüche 1 bis 10, **dadurch gekennzeichnet, dass** der Schwellenwert (S) variabel ist, abhängig von mindestens einem Betriebsparameter des Motors (12).

12. Verfahren zur Regenerierung nach dem vorhergehenden Anspruch, **dadurch gekennzeichnet, dass** mindestens ein Betriebsparameter des Motors (12) für die Temperatur der Abgase (G) repräsentativ ist, die den Partikelfilter (42) passieren.

13. Verfahren zur Regenerierung nach dem vorhergehenden Anspruch, **dadurch gekennzeichnet, dass** ein für die Temperatur der Abgase (G) repräsentativer Parameter von einem Temperaturmessfühler geliefert wird, der sich in der Nähe des Partikelfilters (42) befindet.

14. Verfahren zur Regenerierung nach einem der vorhergehenden Ansprüche 12 oder 13, **dadurch gekennzeichnet, dass** mindestens ein Betriebsparameter des Motors (12) für die Belastung des Motors (12) repräsentativ ist.

15. Verfahren zur Regenerierung eines Partikelfilters (42) nach einem der Ansprüche 11 bis 14, **dadurch gekennzeichnet, dass** ein zweiter Bereich, über den sich die Parameterwerte erstrecken, in mindestens zwei Zonen (82, 84, 86) aufgeteilt wird, und **dadurch gekennzeichnet, dass** ein Schwellenwert (S1, S2, S3) zur Durchführung der Regenerierungsmaßnahmen jeder dieser Zonen (82, 84, 86) entspricht.
